# EUROPÄISCHE PATENTSCHRIFT

(11) **EP 2 835 197 B1**
(45) Veröffentlichungstag und Bekanntmachung des Hinweises auf die Patenterteilung: **02.12.2015**
(21) Anmeldenummer: 13179575.9
(22) Anmeldetag: 07.08.2013
(51) Int. Cl.: B23B 31/16, B23B 31/00

(54) **Spannfutter**
Collet chuck
Mandrin

(43) Veröffentlichungstag der Anmeldung: 11.02.2015
(73) Patentinhaber: SMW-AUTOBLOK Spannsysteme GmbH, 88074 Meckenbeuren (DE)
(72) Erfinder: Maurer, Eckhard, D-88094 Oberteuringen (DE)
(74) Vertreter: Engelhardt & Engelhardt

(56) Entgegenhaltungen:
- DE-C- 317 154
- JP-A- H01 140 905
- US-A- 2 538 521
- US-A- 2 903 268

## Beschreibung

Die Erfindung bezieht sich auf ein Spannfutter, das beispielsweise an einer Werkzeugmaschine zur Abstützung von Wellen, Hohlzylindern oder sonstigen rotationssymmetrischen Bauteilen vorgesehen ist, nach dem Oberbegriff des Patentanspruches 1.

Ein derartiges Spannfutter ist aus der DE 195 02 363 C1 zu entnehmen. Dabei ist in eine Stirnseite des Futterkörpers eine in Längsrichtung des Futterkörpers verlaufende Bohrung vorgesehen, in die ein Betätigungskolben axial verschiebbar eingesetzt ist. Der Betätigungskolben treibt über Zwischenglieder drei Keilstangen an, die in dem Futterkörper eingearbeitete Aufnahmetaschen in diesen axial verschleblich gelagert sind. Die Keilstangen weisen eine Schrägverzahnung auf, die trieblich mit jeweils einer Spannbacke zusammenwirken. In die freie Stirnseite des Futterkörpers sind zudem drei radial verlaufende Führungsnuten eingearbeitet, in die einer der Spannbacken einsetzbar ist. Sobald die Spannbacke mit ihrer Schrägverzahnung in formschlüssiger Wirkverbindung mit der jeweiligen Keilstange steht, kann die Keilstange über den Betätigungskolben bewegt werden und über die Schrägverzahnung zwischen der Keilstange und der Unterseite der Spannbacke wird die jeweilige Spannbacke radial in Richtung eines einzuspannenden Werkstückes zugestellt.

Solche Spannfutter haben sich in der Praxis bewährt und werden in einer Vielzahl von Werkzeugmaschinen verwendet. Bei der Bearbeitung von eingespannten Werkstücken entstehen Verschmutzungen, beispielsweise durch eingesetzte Kühlflüssigkeiten oder durch die von dem Werkstück abgetrennten Späne. Diese Verschmutzungen in Form von Flüssigkeitspartikeln, metallischen Spänen und dergleichen, setzen sich jedoch in den in Richtung des Werkstückes weisenden Führungsnuten ab, wodurch eine erhöhte Reibung zwischen der Spannbacke und der Führungsnut bzw. der Keilstange bei deren Zustellung entsteht. Dadurch verringert sich jedoch die Spannkraft, so dass eine zuverlässige Halterung des zu bearbeitenden Werkstückes nicht mehr gewährleistet ist. Die Führungsnuten können zwar von den Verunreinigungen manuell gesäubert werden, diese Arbeiten sind jedoch zeit- und damit kostenintensiv.

Dieses Problem wurde erkannt und durch die EP 1 759 793 B1 ist ein Spannfutter beschrieben, in dem für jede der drei Führungsnuten eine Schmiermittelversorgung vorgesehen ist. Die triebliche Wirkverbindung zwischen der Spannbacke und einem Spann- oder Betätigungskolben ist bei diesem Stand der Technik mit Hilfe eines Keilhakenkopplung bewerkstelligt.

Nachteiligerweise ist bei dem Betrieb dieses bekannt gewordenen Spannfutters ein Austritt des Schmiermittels aus den Führungsnuten durch die vorhandenen Fliehkräfte in Richtung von Taschen, in denen Ausgleichsgewichte angeordnet sind, vorhanden. Durch die in den Taschen eingebauten Pumpen soll das darin gesammelte Schmiermitte in Richtung der Führungsnuten gepumpt werden. Eine permanente gesonderte Schmierung der Führungsnut bei der Zustellung der Spannbacken ist bei diesem Stand der Technik nicht vorgesehen.

Durch die Führungsnuten gelangen Verschmutzungen nicht nur zwischen diese und die Spannbacken sondern insbesondere auch an die Keilstange, wenn diese betätigt sind. Nachteiligerweise sind die Keilstangen in dem Futterkörper gegen Verschmutzung nicht geschützt, und das Schmiermittel gelangt ausschließlich zwischen die Spannbacke und deren Führungsnuten und nicht an die Keilstange, zumindest nicht derart, dass die Schrägverzahnung der Keilstange und der Spannbacken gesäubert ist, bzw. dass die Verschmutzungen zwischen der Keilstange und der Innenwand des Futterkörpers gelangen und sich dort festsetzen, wodurch die Betätigung der Keilstange gegen einen erhöhten Reibungswiderstand durchzuführen ist. Dies reduziert jedoch die Spannkräfte und führt zu Abnutzungen an der Keilstange bzw. dem Futterkörper, wodurch sich Ungenauigkeiten beim Einspannen der Werkstücke ergeben.

Es ist daher Aufgabe der Erfindung, ein Spannfutter der eingangs genannten Gattung derart weiterzubilden, dass Verschmutzungen weder im Bereich der Führungsnuten und der Spannbacken noch im Bereich der Keilstangen und des Futterkörpers gelangen, und zwar unabhängig von der jeweiligen Betriebsstellung der Spannbacken sollen solche Verschmutzungseintritte verhindert sein.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Es ist besonders vorteilhaft, wenn sowohl an der Spannbacke eine Dichtblende angebracht ist, als auch an der Führungsnut im Bereich der Eintrittsöffnung zu der Durchgangsbohrung ein Dichtungskörper angebracht ist, denn dann wird unabhängig von der Stellung der jeweiligen Spannbacke der Eintritt von Verschmutzungspartikeln in die Führungsnut verhindert. Die Spannbacke kann in zwei Stellungen betrieben werden, nämlich einerseits ragt die Spannbacke teilweise in die axial verlaufende Durchgangsbohrung hinein und andererseits verläuft die Spannbacke ausschließlich in der Führungsnut. Sollte die Spannbacke in die Durchgangsbohrung überführt sein, ist die Dichtungsleiste, die an dem Eingangsbereich der Durchgangsöffnung an der jeweiligen Führungsnut befestigt ist, mit der Funktion der Abdichtung beauftragt und wenn die Spannbacke ausschließlich in der Führungsnut angeordnet ist, dann obliegt es dem Dichtungskörper an der Stirnseite der Spannbacke, den Eintritt von Verschmutzungen zu verhindern.

Zusätzlich kann der Verschmutzungseintritt im Bereich der Keilstange verhindert sein. Zu diesem Zweck ist ein Dichtungskamm vorgesehen, der parallel zu der jeweiligen Führungsnut ausgerichtet ist und der aus zwei Bauteilen, nämlich einem stiftartigen Grundkörper und einem Zahnkamm, besteht. Der Zahnkamm weist in Richtung der Schrägverzahnung der Keilstange ausgerichtete Zähne auf, die in die Schrägverzahnung der Keilstange eingreifen. Sobald sich die Keilstange in Richtung der Spannbacke bewegt wird daher der Dichtungskamm synchron mit der Spannbacke über einen Hubweg s verschoben, so dass keine Relativbewegung zwischen dem Dichtungskamm und der Keilstange entstehen. Dies führt dazu, dass die Schrägverzahnung der Keilstange permanent durch den Dichtungskamm verschlossen ist, so dass keinerlei Verschmutzungspartikel zwischen der Keilstange und dem Futterkörper, in dem die Keilstange beweglich gelagert ist, eintreten können.

Folglich sind durch diese drei konstruktiven Maßnahmen, die auch unabhängig voneinander umgesetzt werden können, sämtliche Öffnungen, die durch die Führungsnuten zur Aufnahme der Spannbacken und durch die Aufnahmekammer zur Lagerung der Keilstange technisch zwingend erforderlich sind, in jedem Betriebszustand der Spannbacke verschlossen.

In der Zeichnung ist ein erfindungsgemäßes Ausführungsbeispiel eines Spannfutters dargestellt, das nachfolgend näher erläutert ist. Im Einzelnen zeigt:
- Figur 1a: ein Spannfutter, in dessen Futterkörper drei Führungsnuten eingearbeitet sind, in denen jeweils eine Spannbacke radial verschieblich gelagert ist und drei Keilstangen, die im Wesentlichen senkrecht zu den Spannbacken angeordnet sind und durch die die Spannbacken radial zustellbar sind, im Betriebszustand der Spannbacken, die vollständig in den Führungsnuten angeordnet sind, in Draufsicht,
- Figur 1b: ein Spannfutter gemäß Figur 1a, im Betriebszustand der Spannbacken, die in eine Durchgangsöffnung, die in dem Futterkörper eingearbeitet ist, teilweise hineinragen,
- Figur 1c: ein vergrößerter Ausschnitt im Bereich der Keilstangen gemäß Figur 1a,
- Figur 2a: das Spannfutter gemäß Figur 1a, entlang der Schnittlinie II-II,
- Figur 2b: die Spannbacke gemäß Figur 1a, in perspektivischer Ansicht mit zwei an ihren gegenüberliegenden Stirnseiten angebrachten Dichtungsblenden,
- Figur 3: das Spannfutter gemäß Figur 1b entlang der Schnittlinie III-III,
- Figur 4: das Spannfutter gemäß Figur 1a entlang der Schnittlinie IV-IV,
- Figur 5a: das Spannfutter gemäß Figur 1a entlang der Schnittlinie V-V und
- Figur 5b: das Spannfutter gemäß Figur 1a im Bereich der Keilstange in vergrößerter und perspektivischer Darstellung.

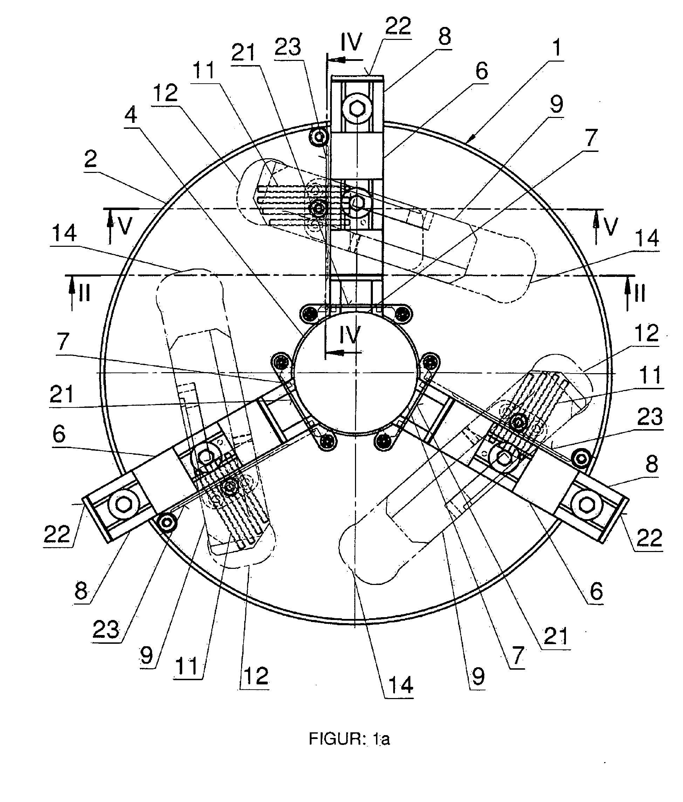

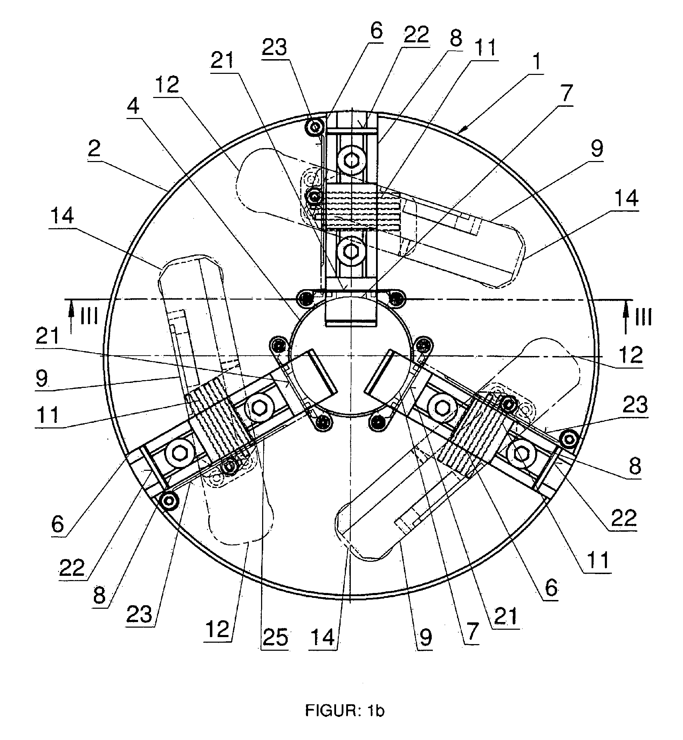

Das in den Figuren 1a und 1b abgebildete Spannfutter 1 besteht aus einem Futterkörper 2, dessen eine freie Stirnseite mit der Bezugsziffer 3 und dessen Längsachse mit der Bezugsziffer 5 gekennzeichnet ist. Die freie Stirnseite 3 weist dabei in Richtung eines nicht dargestellten einzuspannenden Werkstückes drei Spannbacken 8 auf, um dieses an dem Spannfutter 1 im Raum zentriert zu halten. Solche Spannfutter 1 werden insbesondere an Werkzeugmaschinen angebaut, um Wellen, Hohlzylinder und sonstige rotationssymmetrische Bauteile einzuspannen und zu bearbeiten.

Fluchtend zu der Längsachse 5 des Futterkörpers 2 ist eine Durchgangsbohrung 4 in dieses eingearbeitet, in die ein nicht dargestellter Betätigungskolben axial verschiebbar eingesetzt ist. Der Betätigungskolben kann pneumatisch, hydraulisch oder elektrisch hin und her bewegt werden, um sowohl eine Zustellbewegung als auch eine entsprechend groß bemessene Spannkraft zur Halterung der Werkstücke zur Verfügung zu stellen.

Des Weiteren sind in dem Futterkörper 2 drei Aufnahmekammern 12 eingearbeitet, in die jeweils eine Keilstange 9 axial verschiebbar eingesetzt ist. Die Keilstange 9 steht über nicht dargestellte Zwischenglieder in trieblicher Wirkverbindung mit dem Betätigungskofben, so dass bei der axialen Bewegung des Betätigungskolbens jede der drei Keilstangen 9 synchron hin und her bewegt ist.

In die freie Stirnseite 3 des Futterkörpers 2 sind drei radial in Richtung der Durchgangsbohrung 4 verlaufende Führungsnuten 6 eingearbeitet, in die jeweils eine der Spannbacken 8 einsetzbar ist. Jede der Aufnahmekammern 12 ist dabei einer der Führungsnuten 6 zugeordnet und die in die Aufnahmekammern 12 eingeschobenen Keilstangen 9 ragen in die Führungsnuten 6 ein. Der Übergangsbereich zwischen der Aufnahmekammer 12 und der Führungsnut 6 ist mit der Bezugsziffer 13 gekennzeichnet und wird nachfolgend als Durchgangsöffnung bezeichnet.

Sobald eine der Spannbacken 8 in die Führungsnuten 6 von außen hineingeschoben ist, gelangt eine der Keilstange 9 zugewandte Schrägverzahnung 10 die an der Unterseite der jeweiligen Spannbacke 8 angearbeitet ist, in formschlüssiger Wirkverbindung mit einer an der Keilstangen 9 angearbeiteten Schrägverzahnung 11. Sollte daher die jeweilige Keilstange 9 durch den Betätigungskolben hin und her bewegt sein, wird über die beiden Schrägverzahnungen 10 und 11 die drei Spannbacken 8 eine synchrone radiale Zustellbewegung erzeugt, so dass diese in Richtung der Durchgangsbohrung 4 verfahren sind und somit zwischen den drei Spannbacken 8 ein Werkstück zentrisch einspannbar ist.

Solche Spannfutter 1 haben sich in der Praxis für verschiedene Größen von zu bearbeitenden Werkstücken bewährt, da der Einstellbereich der drei Spannbacken 8 an unterschiedlich große Durchmesser der Werkstücke einstellbar ist, und folglich ein Spannbacken-Wechsel 8 ausschließlich dann zu erfolgen hat, wenn sich die Werkstückdimensionen erheblich verändern. Die Figuren 1a und 1b unterscheiden sich ausschließlich dadurch, dass die Spannbacken 8 in verschiedenen Positionen angeordnet sind, nämlich in Figur 1a sind in Spannbacken 8 vollständig in der Führungsnut 6 und in Figur 1b ragen die Spannbacken 8 teilweise in die Durchgangsbohrung 4 ein, wodurch die Stellung der Spannbacken 8 an die Dimension des Werkstückes angepasst ist.

Gleichwohl werden durch die Bearbeitung der Werkstücke Verschmutzungspartikel in die Führungsnuten 6 eindringen. Solche Verschmutzungspartikel können beispielsweise durch Kühl- oder Schmierflüssigkeiten und/oder durch die metallischen Späne, die bei der Bearbeitung des Werkstückes abgetrennt sind, entstehen. Sobald sich jedoch solche Verschmutzungspartikel in den Führungsnuten 6 ablagern, gelangen diese bei der nachfolgenden Überführung der jeweiligen Spannbacke 8 zwischen diesen, so dass der Reibkoeffizient zwischen der Paarung Spannbacke 8 und Führungsnut 6 erheblich erhöht ist. Die Späne und Flüssigkeiten lagern sich zudem in den Aufnahmekammern 12 ab, so dass durch diese die Reibung zwischen der Keilstange 9 und dem Futterkörper 2 erheblich erhöht ist.

Eine solche Reibungserhöhung führt dazu, dass die Betätigungskraft, die über die Spannbacken 8 auf das Werkstück zu übertragen sind, reduziert werden, denn die Reibungskräfte zwischen den Spannbacken 8 und der Führungsnut 6 sowie der Keilstange 9 und dem Futterkörper 2 stehen der Einspannkraft entgegen. Darüberhinaus wird die Zustellgenauigkeit bzw. die Präzision der Einspannung durch diese Verschmutzungspartikel verschlechtert, denn die synchrone Bewegung der Spannbacken 8 kann durch diese Verschmutzungspartikel gestört sein.

Durch das erfindungsgemäße Spannfutter 1 sollen die Verschmutzungen zwischen der Spannbacke 8 und der Führungsnut 6 sowie der Keilstange 9 und dem Futterkörper 2, unabhängig von der Stellung der Spannbacken 8, verhindert sein, denn die Verschmutzungspartikel sollen daran gehindert werden, in die Führungsnuten 6 einzudringen bzw. durch die Durchgangsöffnung 13 gelangen.

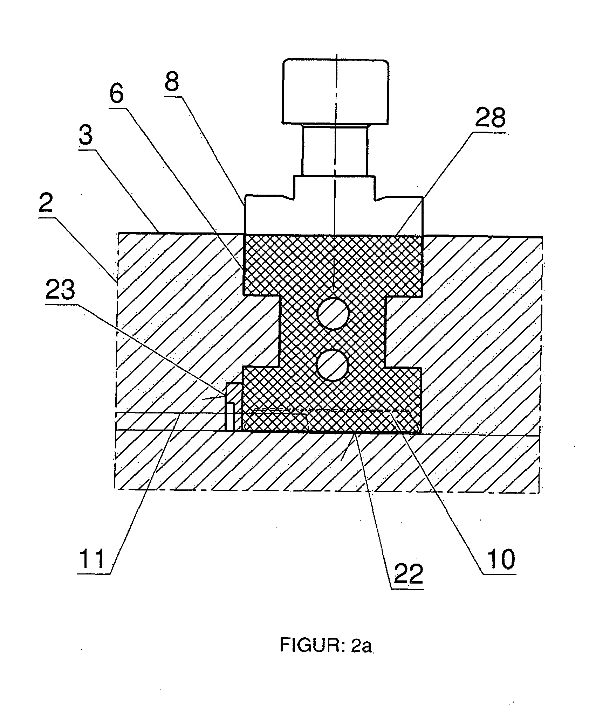

In den Figuren 1a und 2a sind die Spannbacken 8 vollständig innerhalb der Führungsnuten 6 angeordnet. Durch die an den Spannbacken 8, und zwar an deren jeweiligen gegenüberliegenden Stirnseite, angebrachten Dichtungsblenden 22, wird der Zwischenraum zwischen der Führungsnut 6 und der Spannbacke 8 verschlossen.

Die Dichtungsblende 22 besteht aus einem Tragkörper 29, an dem ein Dichtelement 28 angebracht ist, das beispielsweise aus den Werkstoffen Kunststoff, Gummi oder einem Metall-Kunststoff-Gewebe hergestellt ist. Da die Spannbacken 8 beidseitig in die Führungsnuten 6 einsetzbar sind, ist an beiden Stirnseiten der Spannbacken 8 eines der Dichtungsblenden 22 mittels Schrauben befestigt. Sobald daher die Spannbacke 8 in die Führungsnut 6 eingesetzt ist, verschließt eines der Dichtungsblenden 22 den Zwischenraum zwischen der Führungsnut 6 und der Spannbacke 8, so dass Verschmutzungen, insbesondere Späne und Flüssigkeiten, nicht mehr in die Führungsnut 6 eindringen können.

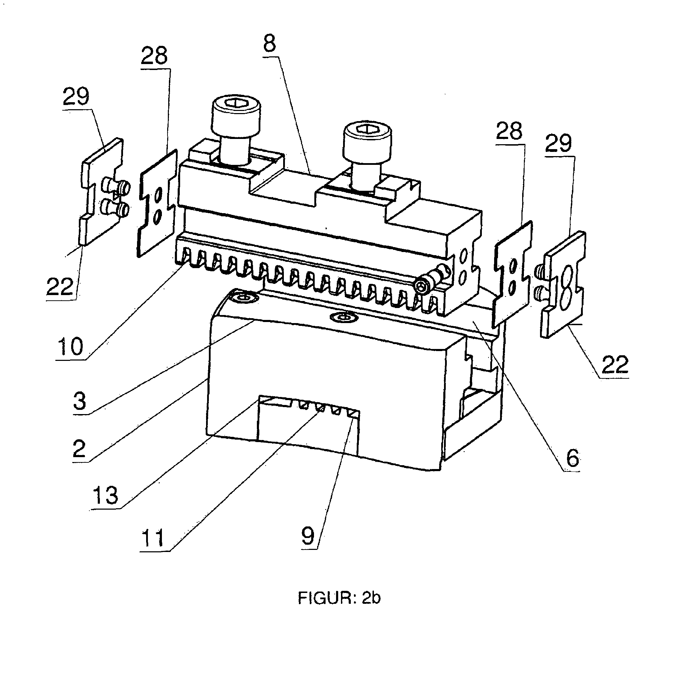

Aus den Figuren 1b und 2b ist ersichtlich, dass die jeweilige Spannbacke 8 teilweise in die Durchgangsbohrung 4 eintauchen und folglich die an den Stirnseiten der Spannbacken 8 angebrachten Dichtungsblenden 22 unwirksam sind bzw. zu weit von der Einmündung der Führungsnut 6 in der Einmündung 7 der Führungsnut 6 in die Durchgangsbohrung 4 entfernt und somit unwirksam sind, da diese nicht mehr mit der Führungsnut 6 zusammenwirken. Um jedoch die Führungsnut 6 gegen Verschmutzungseintritt zu schützen, ist im Bereich der Einmündung 7 der Führungsnut 6 der Durchgangsbohrung 4 ein Dichtungskörper 21 angebracht, der von der jeweiligen Spannbacke 8 durchdrungen ist. Folglich verschließt der Dichtungskörper 21 zusammen mit der Spannbacke 8 die der Durchgangsbohrung 4 zugewandte Eintrittsmündung 7 der jeweiligen Führungsnut 6.

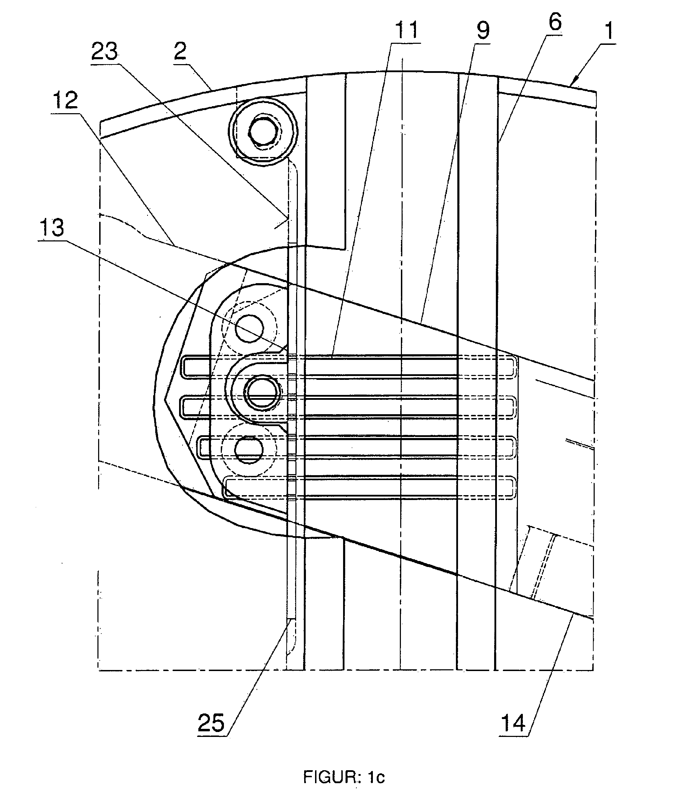

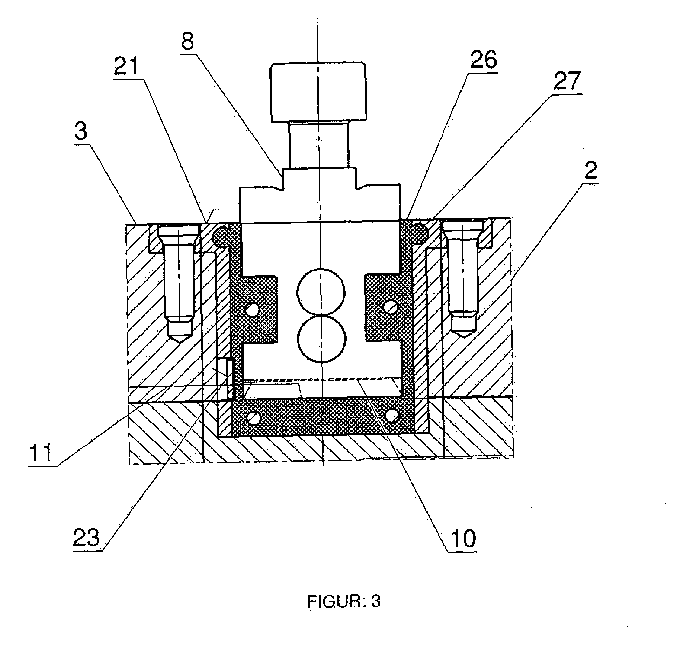

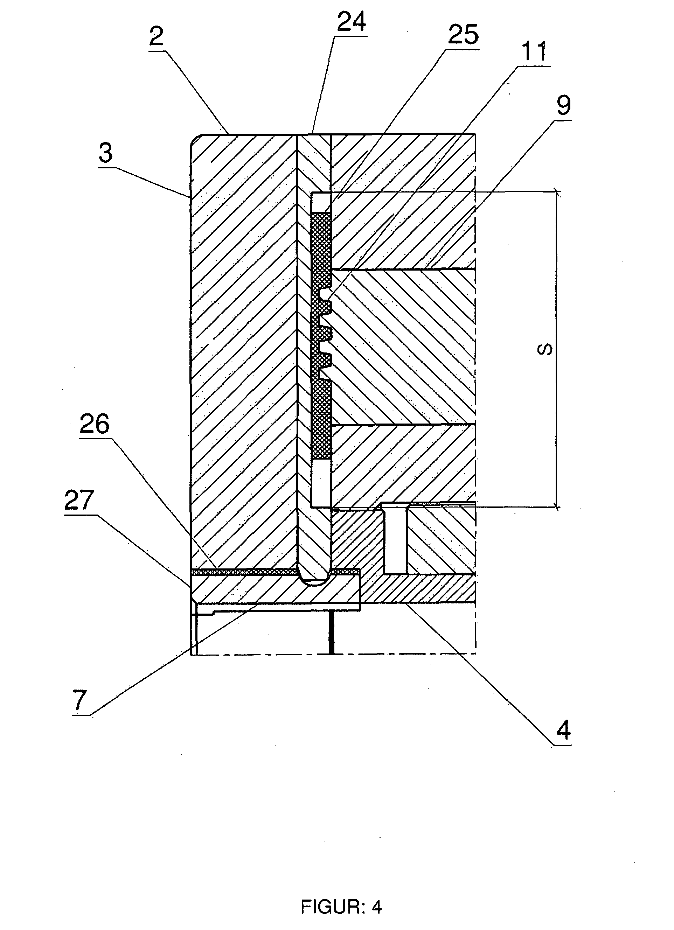

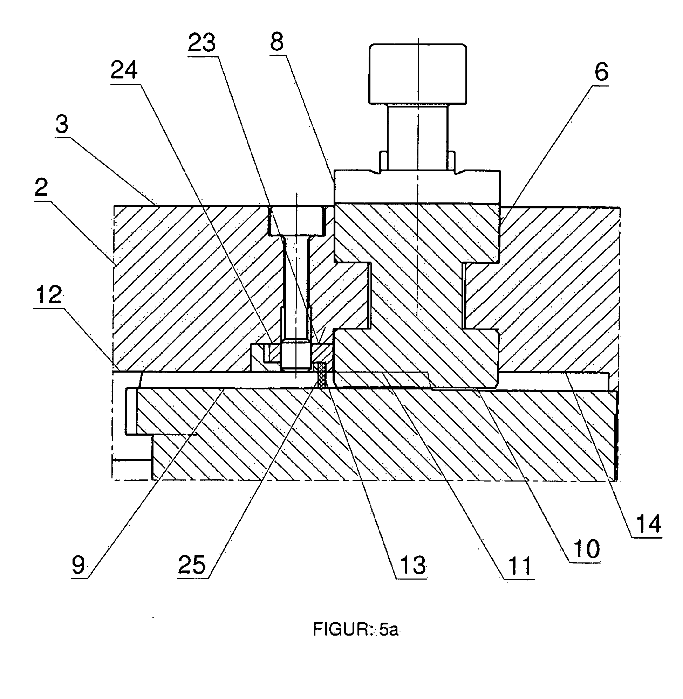

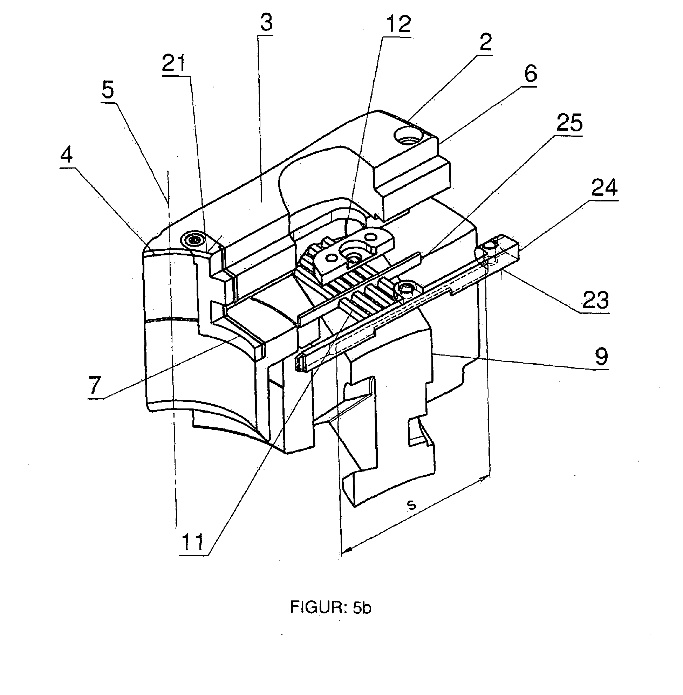

Aus den Figuren 1c und 3, 4, 5a sowie 5b ist ersichtlich, wie die Keilstange 9 von einem Dichtungskamm 23 verschlossen ist. Die Keilstange 9 verläuft in einer Aufnahmekammer 12 und tritt aus dieser in die Führungsnut 6 hinein, um mit der Schrägverzahnung 11, die an der Keilstange 9 angearbeitet ist, in formschlüssiger Wirkverbindung mit der Schrägverzahnung 10 der jeweiligen Spannbacke 8 zu gelangen. Durch eine entsprechende Verschiebung der Keilstange 9 wird die jeweilige Spannbacke 8 radial zugestellt, so dass der Dichtungskamm 23 synchron zu der jeweiligen Spannbacke 8 bewegt ist, da dieser trieblich mit der Keilstange 9 verbunden ist.

Der Dichtungskamm 23 besteht aus einem Grundkörper 24, der eine stiftartige Außenkontur aufweist. Der Querschnitt des Grundkörpers 24 ist als U-Profil ausgestaltet. Der Abstand der beiden parallel verlaufenden Schenkel des Grundkörpers 24 entsprechen dabei dem Hubweg s der Keilstange 9 bzw. der Spannbacke 8. An der der Keilstange 9 zugewandten Stirnseite des Grundkörpers 24 ist ein Zahnkamm 25 angebracht, der aus einem metallischen Werkstoff und/oder aus Kunststoff gebildet ist. In den Zahnkamm 25 ist eine Zahnstruktur eingearbeitet, die mit der Schrägverzahnung 11 der Keilstange 9 korrespondiert, so dass der Zahnkamm 25 in formschlüssiger Wirkverbindung mit der Schrägverzahnung 11 der Keilstange 9 steht. Der Zahnkamm 25 verläuft zwischen den Schenkeln des Grundkörpers 24, der als Lagerung für den Zahnkamm 25 dient.

Mittels des Dichtungskammes 23 wird demnach die Durchgangsöffnung 13 der Aufnahmekammer 12 gemeinsam mit der Keilstange 9 vollständig verschlossen, so dass in die Aufnahmekammer 12 keine Verschmutzungen gelangen.

Mit Hilfe dieser drei konstruktiven Maßnahmen, die unabhängig voneinander einsetzbar sind, ist der Zwischenraum zwischen der Führungsnut 6 und der Spannbacke 8 luft- und/oder wasserdicht verschlossen, bzw. die Keilstange 9 und der Dichtungskamm 23 liegen derart luft- und/oder wasserdicht aneinander an, dass in die Aufnahmekammer 12 der Keilstange 9 keine Verschmutzungspartikel gelangen.

Gegenüberliegend zu der Aufnahmekammer 12 ist eine Ausgleichsbohrung 14 zur Aufnahme der Keilstange 9 in den Futterkörper 2 eingearbeitet. Selbst wenn in diese Verschmutzungspartikel gelangen, beeinträchtigten diese den Reibkoeffizienten nicht, denn in diesem Bereich liegt keine triebliche Wirkverbindung zwischen der Keilstange 9 und der Spannbacke 8 vor.

## Patentansprüche

1. Spannfutter (1) mit einem Futterkörper (2), mit mindestens zwei in den Futterkörper (2) eingearbeiteten und radial verlaufenden Führungsnuten (6), mit jeweils einer in der Führungsnut (6) verschiebbaren Spannbacke (8), die eine in Richtung des Futterkörpers (2) weisende Schrägverzahnung (10, 11) aufweist, mit einer in dem Futterkörper (2) beweglich gelagerten Keilstange (9), die jeweils durch eine an diese angearbeitete Schrägverzahnung (11) mit einer der Schrägverzahnungen (11) der Spannbacken (8) im Spannzustand trieblich verbunden ist, mit einer in dem Futterkörper (2) eingearbeiteten Durchgangsbohrung (4), in die die Führungsnut (6) einmündet,
**dadurch gekennzeichnet,**
**dass** an jeder der Führungsnuten (6) im Bereich der Durchgangsbohrung (4) ein Dichtungskörper (21) angeordnet ist, durch den die jeweilige Führungsnut (6) von der Durchgangsbohrung (4) getrennt ist und durch die die jeweilige Spannbacke (8) bewegbar ist, derart, dass die Spannbacke (8) und der Dichtungskörper (21) luft- und/oder wasserdicht aneinander anliegen,
- und/oder dass an den gegenüberliegenden Stirnseiten der Spannbacken (8) eine Dichtungsblende (22) angebracht ist, deren Außenkontur an die Innenkontur der Führungsnut (6) angepasst ist und dass die Dichtungsblende (22) und die Führungsnut (6) luft- und/oder wasserdicht aneinander anliegen,
- und/oder dass in dem Futterkörper (2) ein im Bereich der Keilstange (9) und im Wesentlichen senkrecht zu dieser verlaufenden Dichtungskamm (23) vorgesehen ist, der in die Schrägverzahnung (11) der Keilstange (9) eingreift und der radial beweglich während der Zustellung der Spannbacken (8) angetrieben ist.

2. Spannfutter nach Anspruch 1,
**dadurch gekennzeichnet,**
**dass** die jeweilige Keilstange (9) in einer in dem Futterkörper (2) eingearbeiteten Aufnahmekammer (12) angeordnet ist und dass die Durchtrittsöffnung (13) der Aufnahmekammer (12) der Keilstange (9) mittels des Dichtungskammes (23) verschlossen ist.

3. Spannfutter nach Anspruch 1 oder 2,
**dadurch gekennzeichnet,**
**dass** der Dichtungskamm (23) aus einem Grundkörper (24) und aus einem Zahnkamm (25) besteht.

4. Vorrichtung nach Anspruch 3,
**dadurch gekennzeichnet,**
der Grundkörper (24) aus einem metallischen Werkstoff und der Zahnkamm (25) aus einem Gummi, einem Kunststoff oder aus einem Gummi-Kunststoff-Gemisch hergestellt ist.

5. Vorrichtung nach Anspruch 3 oder 4,
**dadurch gekennzeichnet,**
**dass** der Grundkörper (24) im Querschnitt als U-Profil ausgestaltet ist und dass der Zahnkamm (25) zwischen den beiden Schenkeln des Grundkörpers (24) beweglich gelagert ist.

6. Spannfutter nach einem der Ansprüche 3 bis 5,
**dadurch gekennzeichnet,**
**dass** der Grundkörper (24) als Lagerhilfe für den Zahnkamm (25) dient und dass der Grundkörper (24) fest mit dem Futterkörper (2) verbunden ist.

## Claims

1. A chuck (1) with a chuck body (2) into which at least two guide grooves (6) running in a radial direction are worked, with a clamping jaw (8) in a movable arrangement in each guide groove (6), in which the clamping jaw (8) has helical gearing (10, 11) pointing in the direction of the chuck body (2), with a wedge rod (9) in a movable mounting in the chuck body (2), in which each wedge rod (9) is in a driving connection with one of the helical gearings (11) of the clamping jaws (8) by means of a helical gearing (11) worked onto the wedge rod (9), with a through-hole (4) worked into the chuck body (2) which emerges in the guide groove (6),
**characterised in that**,
a sealing body (21) is arranged on each of the guide grooves (6) in the area of the through-hole (4), by means of which the particular guide groove (6) is separated from the through-hole (4) and by means of which the particular clamping jaw (8) can be moved, in such a way that the clamping jaw (8) and the sealing body (21) make airtight and/or watertight contact with one another,
- and/or that a sealing orifice (22) is attached on the opposite ends of the clamping jaws (8), with the outer contour of the sealing orifice (22) adapted to the inner contour of the guide groove (6) and that the sealing orifice (22) and the guide groove (6) make airtight and/or watertight contact with one another
- and/or that a sealing comb (23) is provided in the chuck body (2) in the area of the wedge rod (9) and running largely at right angles to it, in which case the sealing comb (23) engages in the helical gearing (11) of the wedge rod (9) and is driven so as to move radially during the advance of the clamping jaws (8).

2. The chuck in accordance with Claim 1,
**characterised in that,**
the corresponding wedge rod (9) is arranged in a holding chamber (12) worked into the chuck body (2) and that the passage opening (13) of the holding chamber (12) of the wedge rod (9) is sealed by means of the sealing comb (23).

3. The chuck in accordance with Claim 1 or 2,
**characterised in that,**
the sealing comb (23) comprises a base body (24) and a toothed comb (25).

4. The chuck in accordance with Claim 3,
**characterised in that,**
the base body (24) is manufactured from a metallic material and the toothed comb (25) is manufactured from rubber, plastic or a rubber/plastic mixture.

5. The chuck in accordance with Claim 3 or 4,
**characterised in that,**
the base body (24) has a U-shaped cross-section and that the toothed comb (25) is mounted in a movable arrangement between the two legs of the base body (24).

6. The chuck in accordance with Claims 3 to 5,
**characterised in that,**
the base body (24) serves as a locating aid for the toothed comb (25) and that the base body (24) is firmly connected to the chuck body (2).

## Revendications

1. Mandrin de serrage (1) avec un corps de mandrin (2), comprenant au moins deux rainures de guidage radiales (6) pratiquées dans le corps de mandrin (2), avec respectivement un mors de serrage (8) se laissant déplacer dans la rainure de guidage (6) et comprenant une denture hélicoïdale (10, 11) donnant vers le corps de mandrin (2), avec une crémaillère (9) mobile dans le corps de mandrin (2) qui, grâce à une denture hélicoïdale (11) pratiquée sur celle-ci, est liée par entraînement, en état serrée, avec une des dentures hélicoïdales (11) des mors de serrage (8), et avec un perçage (4) pratiqué dans le corps de mandrin (2), dans lequel aboutit la rainure de guidage (6),
**caractérisé en ce que**
sur chacune des rainures de guidage (6), il est prévu au niveau du perçage (4) un corps d'étoupage (21) qui a pour effet que la rainure de guidage respective (6) est séparée du perçage (4) permettant de déplacer le mors de serrage respectif (8) se sorte que le mors de serrage (8) et le corps d'étoupage (21) portent de manière étanche à l'air et/ou à l'eau l'un sur l'autre,
- et/ou que sur les faces opposées des mors de serrage (8), il est monté un obturateur (22) dont le contour extérieur est adapté au contour intérieur de la rainure de guidage (6), et que l'obturateur (22) et la rainure de guidage (6) portent de manière étanche à l'air et/ou à l'eau l'un sur l'autre,
- et/ou que dans le corps de mandrin (2), il est prévu au niveau de la crémaillère (9) et essentiellement perpendiculaire sur celle-ci, un élément d'étoupage (23) qui s'engrène dans la denture hélicoïdale (11) de la crémaillère (9) et qui est entraîné, de manière radialement mobile, à l'avance des mors de serrage (8).

2. Mandrin de serrage d'après la revendication 1,
**caractérisé en ce que**
la crémaillère respective (9) est logée dans une chambre de réception (12) pratiquée dans le corps de mandrin (2) et que l'ouverture de passage (13) de la chambre de réception (12) de la crémaillère (9) est fermée par l'élément d'étoupage (23).

3. Mandrin de serrage d'après la revendication 1 ou 2,
**caractérisé en ce que**
l'élément d'étoupage (23) est formé par un corps de base (24) et par une crête dentée (25).

4. Mandrin de serrage d'après la revendication 3,
**caractérisé en ce que**
le corps de base (24) est réalisé en matériau métallique et la crête dentée (25) en caoutchouc, en matériau synthétique ou en un mélange de caoutchouc et de matériau synthétique.

5. Mandrin de serrage d'après la revendication 3 ou 4,
**caractérisé en ce que**
la section transversale du corps de base (24) forme un profil en U et que la crête dentée (25) est logée de manière mobile entre les deux bras du corps de base (24).

6. Mandrin de serrage d'après une des revendications 3 à 5,
**caractérisé en ce que**
le corps de base (24) sert d'assistance à l'appui de la crête dentée (25) et que le corps de base (24) est solidaire du corps de mandrin (2).
